# EUROPEAN PATENT APPLICATION

(11) **EP 3 974 989 A1**
(43) Date of publication of application: **30.03.2022**
(21) Application number: 20862620.0
(22) Date of filing: 11.09.2020
(51) Int. Cl.: G06F 11/20

(54) **LINK STATE SETTING METHOD AND DEVICE FOR VIRTUAL NETWORK INTERFACE CARD, AND STORAGE MEDIUM**

(30) Priority: 11.09.2019 CN 201910859833
(71) Applicant: ZTE Corporation, Shenzhen, Guangdong 518057 (CN)
(72) Inventor: LIU, Yong, Shenzhen, Guangdong 518057 (CN)
(74) Representative: Canzler & Bergmeier Patentanwälte Partnerschaft mbB
(86) International application number: PCT/CN2020/114684
(87) International publication number: WO 2021/047619

(57) **Abstract**

Embodiments of the present disclosure provide a link state setting method and device for a virtual network interface card, and a storage medium. The method comprises: monitoring the link state of a physical network interface card in a kernel mode manner; and setting, according to the monitored link state of the physical network interface card, the link state of a virtual network interface card corresponding to the physical network interface card.

## Description

### TECHNICAL FIELD

The present disclosure relates to, but is not limited to, the field of communications.

### BACKGROUND

In networking scenarios of telecom operators, a backup method using multiple network elements is generally adopted in order to improve network communication reliability of service network elements. An interrupt signal can be received within milliseconds when a link of a service network interface card of a network element is interrupted, so that another standby network element can be switched to in time.

However, after the network elements are changed from physical nodes to Virtual Machines (VMs for short), the above redundancy guarantee method is greatly affected.

The reason is that a network interface card of a VM is a virtual device, and a link state of the virtual network interface card cannot truly reflect a link state of a physical network interface card carrying messages of the virtual network interface card. Therefore, detection messages are generally sent within the VM for determining whether a network communication failure occurs, and switching between VMₛ or network interface cards are carried out when abnormal transmitting/receiving of the detection messages is determined. However, due to performance requirements, a response rate of such soft detection method using the messages is usually within seconds, which, compared with the millisecond-level response to the link interruption in the physical network interface card, greatly increases the possibility of data loss, and poses a greater risk to business services.

### SUMMARY

An embodiment of the present disclosure provides a link state setting method for a virtual network interface card, including: monitoring a link state of a physical network interface card in kernel mode; and setting a link state of a virtual network interface card corresponding to the physical network interface card according to the monitored link state of the physical network interface card.

An embodiment of the present disclosure provides a link state setting apparatus for a virtual network interface card, including: a monitoring device configured to monitor a link state of a physical network interface card in kernel mode; and a setting device configured to set a link state of a virtual network interface card corresponding to the physical network interface card according to the monitored link state of the physical network interface card.

An embodiment of the present disclosure further provides an electronic device, including a memory having a computer program stored therein, and a processor configured to run the computer program to implement the above method.

An embodiment of the present disclosure further provides a computer-readable storage medium having a computer program stored therein, and the computer program is configured to perform the above method when being run.

### BRIEF DESCRIPTION OF THE DRAWINGS

Fig. 1 is a flowchart illustrating a link state setting method for a virtual network interface card according to the present disclosure;
Fig. 2 is a block diagram of a link state setting apparatus for a virtual network interface card according to the present disclosure;
Fig. 3 is a deployment diagram of virtual network interface cards according to the present disclosure;
Fig. 4 is a schematic diagram illustrating a case where a link state of a virtual network interface card is changed along with a link state of a physical network interface card according to the present disclosure;
Fig. 5 is a deployment diagram of virtual network interface cards according to the present disclosure; and
Fig. 6 is a schematic diagram illustrating a case where a link state of a virtual network interface card is changed along with a link state of a physical network interface card according to the present disclosure.

### DETAILED DESCRIPTION

The present disclosure provides a link state setting method and apparatus for a virtual network interface card, and a storage medium, so as to solve the problem of slow response to link interruption caused by slow determination of a link state of a virtual network interface card in some cases.

The technical solutions of the present disclosure are described in detail below with reference to the drawings and embodiments. It should be noted that the terms "first" and "second" herein are only used for distinguishing, rather than indicating a chronological order. In addition, the technical solutions of the embodiments can be arbitrarily combined with one another if no conflict is incurred.

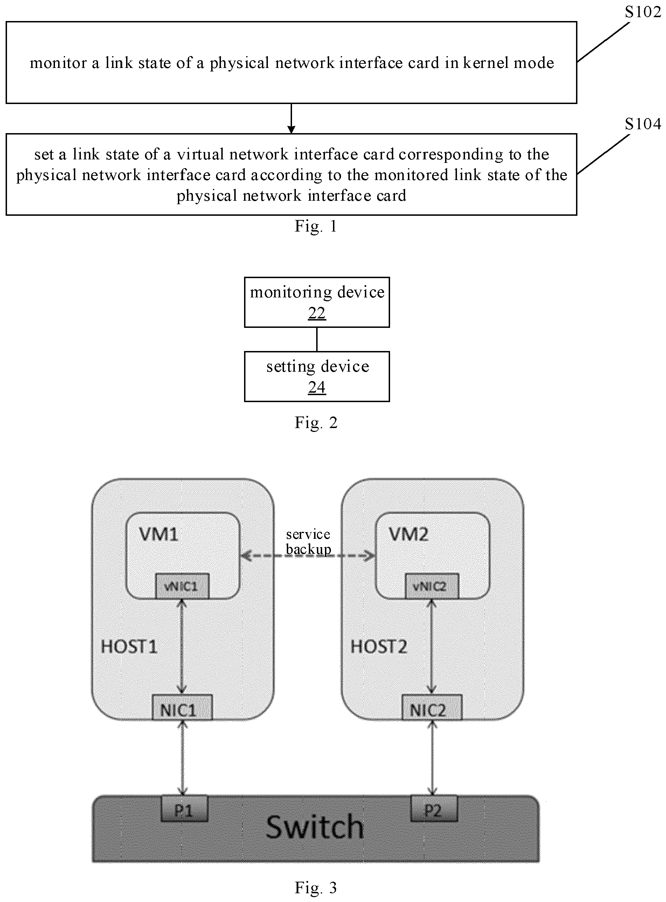

The present disclosure provides a link state setting method for a virtual network interface card. Fig. 1 is a flowchart illustrating a link state setting method for a virtual network interface card according to the present disclosure. As shown in Fig. 1, the method includes operations S102 and S104.

At the operation S102, a link state of a physical network interface card is monitored in kernel mode.

At the operation S104, a link state of a virtual network interface card corresponding to the physical network interface card is set according to the monitored link state of the physical network interface card.

With the above method, the link state of the physical network interface card is directly monitored in kernel mode and the link state of the virtual network interface card corresponding to the physical network interface card is set according to the monitored link state of the physical network interface card, which ensures a speed of determining the link state of the virtual network interface card by the virtual network interface card, so that the VM can later carry out protection switching between virtual network interface cards quickly according to the set link state of the virtual network interface card. Moreover, the virtual network interface card can quickly and promptly determine the link state thereof with the above method, so that the VM can later perform a series of operations such as protection switching between virtual network interface cards according to the set link state of the virtual network interface card. Therefore, the stability of VM network is improved.

In the present disclosure, setting the link state of the virtual network interface card corresponding to the physical network interface card according to the monitored link state of the physical network interface card includes: in a case where it is monitored that the link state of the physical network interface card is disconnected, setting the link state of the virtual network interface card corresponding to the physical network interface card to be disconnected.

In the present disclosure, setting the link state of the virtual network interface card corresponding to the physical network interface card according to the monitored link state of the physical network interface card includes: in a case where it is monitored that an active-standby relationship of the physical network interface card is changed and the physical network interface card is changed as a standby network interface card, setting the link state of the virtual network interface card corresponding to the physical network interface card to be disconnected; or in a case where it is monitored that the active-standby relationship of the physical network interface card is changed and the physical network interface card is changed as an active network interface card, setting the link state of the virtual network interface card corresponding to the physical network interface card to be connected.

The above method relates to a link state setting process of a virtual network interface card in a case where a bonding state is changed under the condition that a physical network interface card is subjected to active-standby bonding.

In the present disclosure, setting the link state of the virtual network interface card corresponding to the physical network interface card according to the monitored link state of the physical network interface card includes: sending the monitored link state of the physical network interface card to a network interface card agent, and setting the link state of the virtual network interface card by the network interface card agent.

In the present disclosure, setting the link state of the virtual network interface card by the network interface card agent includes: setting the link state of the virtual network interface card by the network interface card agent through a Virtual Machine Monitor (VMM) or a Virtual Function (VF).

The present disclosure provide an embedded detection solution closer to a network interface card driver. The network interface card agent is configured on a host where the VM is located, and may sense a change in the link state of the physical network interface card within milliseconds. In a scenario where the link of the physical network interface card is interrupted or the physical network interface card is switched from an active physical network interface card to a standby physical network interface card, VMM control technology or Single Root-I/O Virtualization (SR-IOV) VF setting technology is adopted to forcibly interrupt the physical network interface to transmit an external link state into the interior of the VM, so that the VM may quickly and promptly confirm abnormal phenomena of an external network and perform service switching accordingly, which improves the stability of VM network.

The present disclosure provides a link state setting apparatus for a virtual network interface card. Fig. 2 is a block diagram of a link state setting apparatus for a virtual network interface card according to the present disclosure. As shown in Fig. 2, the link state setting apparatus for a virtual network interface card includes a monitoring device 22 and a setting device 24.

The monitoring device 22 is configured to monitor a link state of a physical network interface card in kernel mode.

The setting device 24 is configured to set a link state of a virtual network interface card corresponding to the physical network interface card according to the monitored link state of the physical network interface card.

In the present disclosure, the setting device 24 is further configured to set the link state of the virtual network interface card corresponding to the physical network interface card to be disconnected in a case where it is monitored that the link state of the physical network interface card is disconnected.

In the present disclosure, the setting device 24 is further configured to set the link state of the virtual network interface card corresponding to the physical network interface card to be disconnected in a case where it is monitored that an active-standby relationship of the physical network interface card is changed and the physical network interface card is changed as a standby network interface card, or to set the link state of the virtual network interface card corresponding to the physical network interface card to be connected in a case where it is monitored that the active-standby relationship of the physical network interface card is changed and the physical network interface card is changed as an active network interface card.

The present disclosure is illustrated below in conjunction with scenarios.

The solutions provided according to the present disclosure can be applied in any virtualized environment of commonly used Kernel-based Virtual Machine (KVM) cloud platforms where a host provides a virtual network interface card service for a VM through the KVM platform. The KVM is one of mainstream VMMs in the industry.

Fig. 3 is a deployment diagram of virtual network interface cards according to the present disclosure. As shown in Fig. 3, two hosts HOST1 and HOST2 provide two service VMₛ VM1 and VM2 through the KVM platform.

Physical network interface cards NIC1 and NIC2 provide virtual network interface card vNIC1 and vNIC2 for VM1 and VM2, respectively.

HOST1 and HOST2 are connected to switch ports P1 and P2 of an external switch via NIC1 and NIC2, respectively. P1 and P2 operate in an active/standby mode.

VM1 and VM2 actually have an active-standby relationship, and service software in VM1 and VM2 switches services between the VMₛ according to link states of vNIC1 and vNIC2.

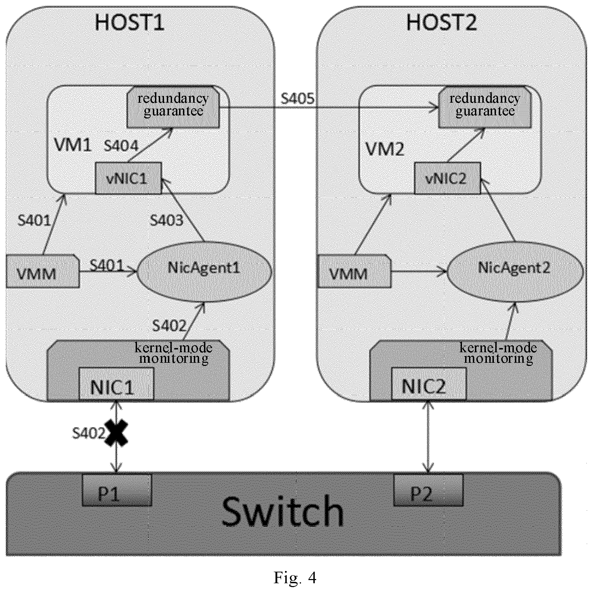

Fig. 4 is a schematic diagram illustrating a case where a link state of a virtual network interface card is changed along with a link state of a physical network interface card according to the present disclosure. As shown in Fig. 4, at operation S401, when VM1 and VM2 are created on HOST1 and HOST2, virtual network interface card agents NicAgent1 and NicAgent2 are requested to manage vNIC1 and vNIC2, and a kernel-mode physical network interface card interrupt monitoring program is started; at operation S402, when a link between NIC1 and P1 is abnormal, the interrupt monitoring program in kernel mode sends a message to NicAgent1; at operation S403, NicAgent1 sets a link state of vNIC1 to be DOWN; at operation S404, the state of vNIC1 in VM1 is changed and is sent to an application (APP) through an interrupt; and at operation S405, a redundancy guarantee system of the APP actively initiates service switching to VM2, thereby ensuring the continuity of upper-layer services.

In a single-physical-network-interface-card-level (i.e., no binding) scenario, a link interrupt message of network interface card is received with a kernel method provided by an Operation System (OS), and a NicAgent resides in a user memory. After the above interrupt monitoring mechanism is triggered, the NicAgent may receive a system notification within milliseconds. The NicAgent sets a link state of a virtual network interface card corresponding to a VM to be disconnected with a VM management method provided by the KVM, so as to trigger a service exception handling process in the VM.

The present disclosure is illustrated below in conjunction with scenarios.

The solutions provided according to the present disclosure can be applied in complex networking scenarios. Based on higher drive of network communication availability, a basic service provider bonds multiple physical network interface cards on a single host by using Bonding technology, so as to realize high communication availability without switching VMₛ when a physical link is interrupted.

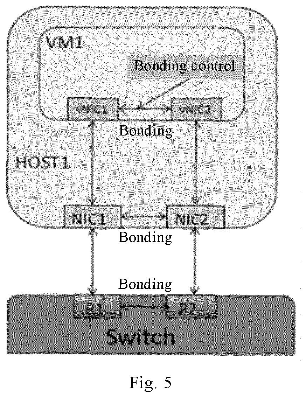

Fig. 5 is a deployment diagram of virtual network interface cards according to the present disclosure. As shown in Fig. 5, a host HOST1 provides a service VM VM1 through the KVM platform.

HOST1 is connected to switch ports P1 and P2 of an external switch via physical network interface cards NIC1 and NIC2. P1 and P2 operate in an active/standby mode.

The physical network interface card NIC1 provides virtual network interface card vNIC1 for VM1 based on SR-IOV technology; correspondingly, NIC2 provides a virtual network interface card vNIC2 for VM1.

Corresponding to the bonding between NIC1 and NIC2 carried out on HOST1, bonding between vNIC1 and vNIC2 is carried out within VM1.

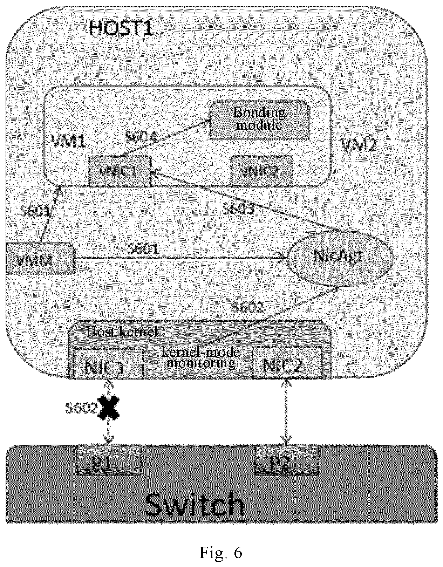

Fig. 6 illustrates a processing process in a case where a link state of a virtual network interface card is changed along with a link state of a physical network interface card according to the present disclosure.

At operation S601, when VM1 is created on HOST1, NicAgent1 is requested to manage vNIC1 and vNIC2, and a kernel-mode network interface card bonding monitoring program is started.

At operation S602, when an active-standby bonding relationship between NIC1 and P1 is changed (at this time, a connection between NIC1 and P1 is an active link, and active/standby switching needs to be performed when the link between NIC1 and P1 fails), NicAgent1 receives a network interface card bonding switching signal sent from the kernel.

At operation S603, NicAgent1 sets a link state of vNIC1 to be DOWN.

At operation S604, when the state of vNIC1 in VM1 is changed, the state is sent to a bonding management module through an interrupt, and sending of packets on the vNIC1 is stopped, thereby ensuring the continuity of upper-layer services to the greatest extent.

A network interface card bonding monitoring agent receives a bonding state in real time through a monitor mechanism of a Bonding Management Layer (in current CT virtualized commercial scenarios, Open vSwitch is a commonly used bonding management layer).

In addition, a NicAgent resides in a user memory. The NicAgent may receive a system notification within milliseconds after the above active-standby relationship is changed. The NicAgent sets a link state of a virtual network interface card corresponding to an active connection to be disconnected with a VM management method provided by the KVM, so as to trigger a service exception handling process in the VM.

Tthe present disclosure further provides a computer-readable storage medium having a computer program stored therein, and the computer program is configured to perform the operations of the above method when being run.

In the present disclosure, the storage medium may be configured to store a computer program for performing the following operations: monitoring a link state of a physical network interface card in kernel mode; and setting a link state of a virtual network interface card corresponding to the physical network interface card according to the monitored link state of the physical network interface card.

In the present disclosure, the storage medium may include, but is not limited to: various media capable of storing computer programs, such as a Universal Serial Bus Flash Disk (USB flash disk), a Read-Only Memory (ROM), a Random Access Memory (RAM), a mobile hard disk, a magnetic disk and an optical disc.

The present disclosure further provides an electronic device, including a memory having a computer program stored therein, and a processor configured to run the computer program to perform the operations of the above method.

In the present disclosure, the electronic device may further include a transmission device and an input/output device. The transmission device is connected to the processor, and the input/output device is also connected to the processor.

In the present disclosure, the processor may be configured to run the computer program to perform the following operations: monitoring a link state of a physical network interface card in kernel mode; and setting a link state of a virtual network interface card corresponding to the physical network interface card according to the monitored link state of the physical network interface card.

In the present disclosure, reference may be made to the examples described in the above embodiments and implementations for the examples of the embodiments, and thus the examples of this exemplary embodiment are not described here again.

According to the present disclosure, the link state of the physical network interface card is directly monitored in kernel mode and the link state of the virtual network interface card corresponding to the physical network interface card is set according to the monitored link state of the physical network interface card, which replaces the method of detecting abnormal links by using messages in some cases, so that a speed of determining the link state of the virtual network interface card by the virtual network interface card is ensured. The VM can later perform a series of operations such as protection switching between virtual network interface cards according to the set link state of the virtual network interface card.

The description above is merely of the embodiments of the present disclosure, but is not intended to limit the present disclosure. Various modifications and changes can be made to the present disclosure by those of ordinary skill in the art. Any modification, equivalent replacement and improvement made within the spirit and principle of the present disclosure should be included in the scope of the claims of the present disclosure.

## Claims

1. A link state setting method for a virtual network interface card, comprising:
monitoring a link state of a physical network interface card in kernel mode; and
setting a link state of a virtual network interface card corresponding to the physical network interface card according to the monitored link state of the physical network interface card.

2. The method of claim 1, wherein setting the link state of the virtual network interface card corresponding to the physical network interface card according to the monitored link state of the physical network interface card comprises:
in a case where it is monitored that the link state of the physical network interface card is disconnected, setting the link state of the virtual network interface card corresponding to the physical network interface card to be disconnected.

3. The method of claim 1, wherein setting the link state of the virtual network interface card corresponding to the physical network interface card according to the monitored link state of the physical network interface card comprises:
in a case where it is monitored that an active-standby relationship of the physical network interface card is changed and the physical network interface card is changed as a standby network interface card, setting the link state of the virtual network interface card corresponding to the physical network interface card to be disconnected; or
in a case where it is monitored that the active-standby relationship of the physical network interface card is changed and the physical network interface card is changed as an active network interface card, setting the link state of the virtual network interface card corresponding to the physical network interface card to be connected.

4. The method of any one of claims 1 to 3, wherein setting the link state of the virtual network interface card corresponding to the physical network interface card according to the monitored link state of the physical network interface card comprises:
sending the monitored link state of the physical network interface card to a network interface card agent; and
setting the link state of the virtual network interface card by the network interface card agent.

5. The method of claim 4, wherein setting the link state of the virtual network interface card by the network interface card agent comprises:
setting the link state of the virtual network interface card by the network interface card agent through a virtual machine monitor or a virtual function.

6. A link state setting apparatus for a virtual network interface card comprises:
a monitoring device configured to monitor a link state of a physical network interface card in kernel mode; and
a setting device configured to set a link state of a virtual network interface card corresponding to the physical network interface card according to the monitored link state of the physical network interface card.

7. The apparatus of claim 6, wherein the setting device is further configured to set the link state of the virtual network interface card corresponding to the physical network interface card to be disconnected in a case where it is monitored that the link state of the physical network interface card is disconnected.

8. The method of claim 6, wherein the setting device is further configured to
set the link state of the virtual network interface card corresponding to the physical network interface card to be disconnected in a case where it is monitored that an active-standby relationship of the physical network interface card is changed and the physical network interface card is changed as a standby network interface card, or
set the link state of the virtual network interface card corresponding to the physical network interface card to be connected in a case where it is monitored that the active-standby relationship of the physical network interface card is changed and the physical network interface card is changed as an active network interface card.

9. An electronic device, comprising a memory having a computer program stored therein, and a processor, wherein the processor performs the link state setting method for a virtual network interface card of any one of claims 1 to 5 when running the computer program.

10. A computer-readable storage medium having a computer program stored therein, wherein when the computer program is run by a processor, the processor performs the link state setting method for a virtual network interface card of any one of claims 1 to 5.
